# EUROPÄISCHE PATENTSCHRIFT

(11) **EP 3 404 305 B1**
(45) Veröffentlichungstag und Bekanntmachung des Hinweises auf die Patenterteilung: **24.06.2020**
(21) Anmeldenummer: 18157541.6
(22) Anmeldetag: 20.02.2018
(51) Int. Cl.: F16L 33/00, F02M 35/10, F16L 47/02, B29C 65/06, B29C 65/00, B29L 31/24

(54) **VERBINDUNGSANORDNUNG FÜR FLUIDLEITUNGEN**
CONNECTION ASSEMBLY FOR FLUID LINES
DISPOSITIF DE RACCORDEMENT POUR CONDUITS FLUIDIQUES

(30) Priorität: 18.05.2017 DE 102017208432
(43) Veröffentlichungstag der Anmeldung: 21.11.2018
(73) Patentinhaber: ContiTech MGW GmbH, 34346 Hannoversch-Münden (DE)
(72) Erfinder: Becker, Viktor, 37085 Göttingen (DE); Hensel, Knut, 04655 Kohren-Sahlis (DE); Fassl, Holger, 34379 Calden (DE); Braam, Axel, 34346 Hannoversch-Münden (DE)
(74) Vertreter: Finger, Karsten

(56) Entgegenhaltungen:
- EP-A1- 0 333 949
- EP-A1- 2 878 871
- EP-A1- 2 884 087
- DE-A1-102010 037 540
- DE-A1-102015 215 394

## Beschreibung

Die Erfindung betrifft eine Verbindungsanordnung für Fluidleitungen, aufweisend einen Anschlussstutzen und einen Ladeluftrohr.

Ladeluftrohre werden aufgrund der einfachen Herstellbarkeit und des geringen Gewichts heute oft als Blasformteil ausgeführt. Dabei sind auch geringe Wandstärken erreichbar.

Problematisch sind diese geringen Wandstärken im Bereich der Anschlüsse, da die Festigkeit der Rohrwand meist nicht ausreicht, um weitere Fluidleitungen an das Rohr anzuschließen. Dies geschieht meist durch das Aufschieben eines Schlauches auf das Endstück des Ladeluftrohres und anschließender Verklemmung mit Spannhülsen oder Schellen. Ohne Verstärkung des Endes des Ladeluftrohres würde dieses bei der Verklemmung zusammengedrückt.

Die Endstücke sind daher meist mit einer metallischen Stützhülse verstärkt. Dies verursacht teilweise erheblichen Aufwand, da das Endstück des Ladeluftrohres auf ein definiertes Maß aufgespielt werden muss, um die metallene Hülse in das Innere des Rohres einpressen zu können. Da das thermische Verhalten der Kunststoffe des Ladeluftrohres und des Metalles der Stützhülse unterschiedlich sind, muss die Hülse auch gegen ein herausfallen aus dem Rohrende gesichert sein. Dazu kann beispielsweise der Kunststoff am Rohrende nochmals aufgeschmolzen und nach innen gedrückt werden. So entsteht eine Herausfallsperre.

Neben dem hohen Fertigungsaufwand ist die Stützhülse auch relativ schwer und teuer.

DE10 2015 215 394 A1 offenbart ein Luftleitungsrohr für den Ansaugtrakt eines Verbrennungsmotors.

Der Erfindung liegt die Aufgabe zugrunde, eine einfache und kostengünstige Verbindungsanordnung für Fluidleitungen zu schaffen, die eine sichere Montage fluidführender Bauteile ermöglicht.

Diese Aufgabe wird dadurch gelöst, dass der Anschlussstutzen als separates Bauteil ausgeführt ist, welches mindestens an einem Ladeluftrohr-Ende anschweißbar ist.

Separate Bauteile haben den Vorteil, dass mögliche Wandstärken und geometrische Ausgestaltung wesentlich variabler sind, als bei der Herstellung durch Blasformen zusammen mit dem Ladeluftrohr.

Der Anschlussstutzen ist durch Kunststoff-Spritzgießen hergestellt.

Das Kunststoff-Spritzgießen ist ein günstiger und sicherer Herstellprozess, der vielfältige Formgebung ermöglicht und eine hohe Maßgenauigkeit gewährleistet.

Erfindungsgemäß weist der Anschlussstutzen im Inneren radial angeordnete Stützrippen auf.

Die Stützrippen sorgen für eine besonders hohe Steifigkeit des Anschlussstutzens, sodass die Wandstärke geringer ausfallen kann.

In einer Weiterbildung der Erfindung weist der Anschlussstutzen an einem axialen Ende eine Anschweißfläche auf, die mit der Form des Endes des Ladeluftrohres korrespondiert.

Die Anschweissfläche gewährleistet einen definierten Kontakt zu dem jeweiligen Ende der Ladeluftrohre, so dass die Sicherheit und Reproduzierbarkeit des Anschweißprozesses verbessert ist.

In einer Weiterbildung der Erfindung weist der Anschlussstutzen auf seiner äußeren Mantelfläche umlaufende Rillen auf.

Die umlaufenden Rillen verbessern den festen Sitz von weiteren fluidführenden Bauteilen, die auf den Anschlussstutzen aufschiebbar und verklemmbar sind.

In einer Weiterbildung der Erfindung weist der Anschlussstutzen an seinem der Anschweissfläche gegenüberliegenden Ende einen in axialer Richtung angeschrägten, radial nach außen ragenden umlaufenden Wulst auf.

Ein derartiger Wulst verbessert die Sicherheit gegen axiales Abziehen der weiteren, auf dem Anschlussstutzen festgeklemmten fluidführenden Bauteile. Die axiale Anschrägung dient dabei als Einführhilfe, um die Montage zu vereinfachen.

Anhand der Zeichnung wird nachstehend ein Beispiel der Erfindung näher erläutert. Es zeigt
Fig. 1 eine perspektivische Darstellung eines erfindungsgemäßen Anschlussstutzens mit einer an Schweiß fläche,
Fig. 2 den erfindungsgemäßen Anschlussstutzen mit umlaufenden Wulst und
Fig. 3 einen Zusammenbau des erfindungsgemäßen Anschlussstutzens mit einem blasgeformten Ladeluft-Rohrabschnitt.

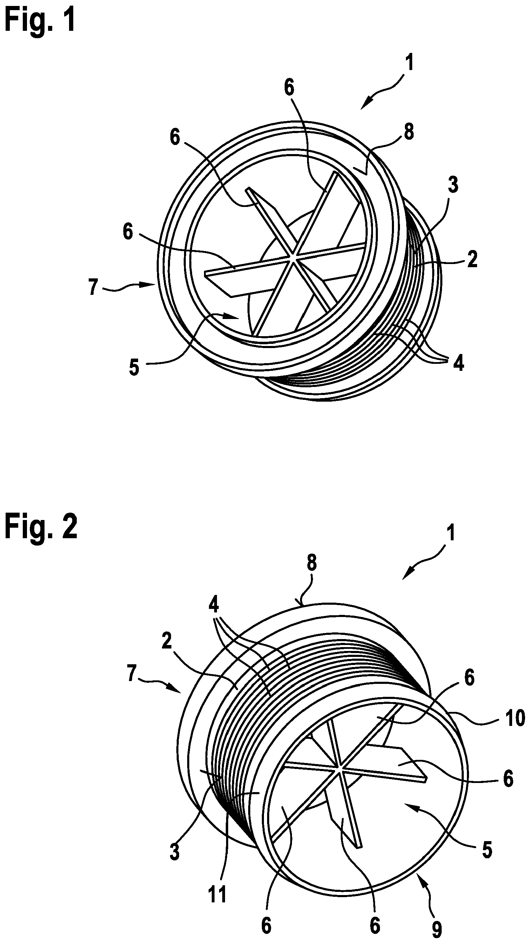

In Fig. 1 ist ein erfindungsgemäßer Anschlussstutzen 1 gezeigt. Der Anschlussstutzen 1 ist aus thermoplastischem Kunststoff im Spritzgussverfahren hergestellt.

Der Anschlussstutzen einst weist einen zylindrischen Grundkörper 2 auf, der auf seiner äußeren Mantelfläche 3 eine Mehrzahl von Rillen 4 aufweist. Die Rillen 4 dienen dazu, die Befestigung weiterer, hier nicht gezeigter Fluidleitungen auf dem Anschlussstutzen sicherer zu gestalten. In seiner inneren Durchlassöffnung 5 weist Anschlussstutzen 1 radial nach außen weisende, quasi sternförmig angeordnete Stützrippen 6 auf. Die Stützrippen 6 dienen der Versteifung des Grundkörpers 2. An seinem ersten axialen Ende 7 weist der Anschlussstutzen 1 eine Anschweißfläche 8 auf, die umlaufend um das erste Ende 7 herum angeordnet ist und axial plan ausgerichtet ist.

In Figur 2 ist der Anschlussstutzen 1 von seinem zweiten axialen Ende 9 aus gesehen dargestellt. Das zweite Ende 9 weist einen umlaufenden um das Ende 9 herum angeordneten Wulst 10 auf. Der Wulst 10 weist in Richtung auf das zweite axiale Ende 9 eine Anschrägung 11 auf. Die Anschrägung 11 dient als Einführhilfe bei der Montage weiterer, hier nicht gezeigter Fluidleitungen.

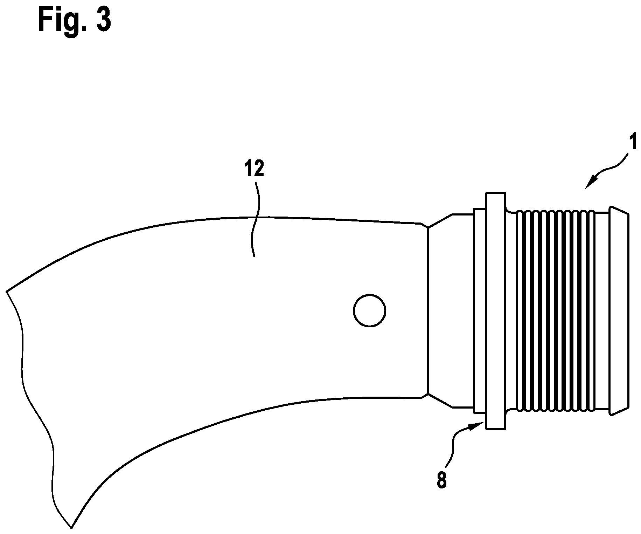

In Fig. 3 ist ein Zusammenbau des Anschlussstutzens 1 mit einem Ladeluftrohrabschnitt 12 gezeigt. Die an Schweiß fläche 8 ist mit dem Ladeluftrohrabschnitt 12 mittels einer hier nicht sichtbaren Reibschweißung fest und luftdicht verschweißt.

Durch die erfindungsgemäße Anordnung kann eine metallische Stützhülse im Ladeluft-Rohrabschnitt 12 entfallen.

### Bezugszeichenliste

### (Teil der Beschreibung)

- 1: Anschlussstutzen
- 2: Grundkörper des Anschlussstutzens 1
- 3: Mantelfläche des Grundkörpers 2
- 4: Rillen auf der Mantelfläche 3
- 5: Durchlassöffnung des Anschlussstutzens 1
- 6: Stützrippen
- 7: Erstes axiales Ende des Anschlussstutzens 1
- 8: Anschweissfläche
- 9: Zweites axiales Ende des Anschlussstutzens 1
- 10: Wulst
- 11: Anschrägung des Wulstes 10
- 12: Ladeluftrohrabschnitt

## Patentansprüche

1. Verbindungsanordnung für Fluidleitungen, aufweisend ein Ladeluftrohr (12) und mindestens einen Anschlussstutzen (1), der durch Kunststoff-Spritzgießen hergestellt und als separates Bauteil ausgeführt ist, welches mindestens an einem Ladeluftrohr-Ende (7, 9) anschweissbar ist, **dadurch gekennzeichnet, dass** der Anschlussstutzen (1) im Inneren (5) radial angeordnete Stützrippen (6) aufweist.

2. Verbindungsanordnung nach Anspruch 1, **dadurch gekennzeichnet, dass** der Anschlussstutzen (1) an einem axialen Ende (7) eine Anschweißfläche (8) aufweist, die mit der Form des Endes des Ladeluftrohres (12) korrespondiert.

3. Verbindungsanordnung nach Anspruch 1 oder 2, **dadurch gekennzeichnet, dass** der Anschlussstutzen (1) auf seiner äußeren Mantelfläche (3) umlaufende Rillen (4) aufweist.

## Claims

1. Connection arrangement for fluid lines, having a charge-air pipe (12) and at least one connector piece (1) which is produced by plastic injection moulding and which is designed as a separate component which is able to be welded at least to a charge-air pipe end (7, 9), **characterized in that**, in the interior (5), the connector piece (1) has radially arranged support ribs (6).

2. Connection arrangement according to Claim 1, **characterized in that**, at one axial end (7), the connector piece (1) has a weld-on surface (8) which corresponds to the shape of the end of the charge-air pipe (12).

3. Connection arrangement according to Claim 1 or 2, **characterized in that**, on its outer lateral surface (3), the connector piece (1) has encircling grooves (4) .

## Revendications

1. Agencement de connexion pour conduites fluidiques, présentant un tuyau d'air de suralimentation (12) et au moins une tubulure de raccordement (1) qui est fabriquée par moulage par injection de plastique et qui est réalisée sous forme de composant séparé, qui peut être raccordé par soudage à au moins une extrémité (7, 9) du tuyau d'air de suralimentation, **caractérisé en ce que** la tubulure de raccordement (1) présente des nervures de support (6) disposées radialement à l'intérieur (5) .

2. Agencement de connexion selon la revendication 1, **caractérisé en ce que** la tubulure de raccordement (1) présente, à une extrémité axiale (7), une surface de raccordement par soudage (8) qui correspond à la forme de l'extrémité du tuyau d'air de suralimentation (12).

3. Agencement de connexion selon la revendication 1 ou 2, **caractérisé en ce que** la tubulure de raccordement (1) présente des rainures périphériques (4) sur sa surface d'enveloppe extérieure (3).
